# EUROPÄISCHE PATENTSCHRIFT

(11) **EP 3 261 767 B1**
(45) Veröffentlichungstag und Bekanntmachung des Hinweises auf die Patenterteilung: **03.04.2019**
(21) Anmeldenummer: 15710415.9
(22) Anmeldetag: 27.02.2015
(51) Int. Cl.: B02C 19/18, H02J 7/00

(54) **VERFAHREN UND VORRICHTUNG ZUR FRAGMENTIERUNG UND/ODER SCHWÄCHUNG EINES MATERIALSTÜCKS MITTELS HOCHSPANNUNGSENTLADUNGEN**
METHOD AND DEVICE FOR THE FRAGMENTATION AND/OR WEAKENING OF A PIECE OF MATERIAL BY MEANS OF HIGH-VOLTAGE DISCHARGES
PROCÉDÉ ET DISPOSITIF DE FRAGMENTATION ET/OU D'AFFAIBLISSEMENT D'UN MORCEAU DE MATÉRIAU AU MOYEN DE DÉCHARGES DE HAUTE TENSION

(43) Veröffentlichungstag der Anmeldung: 03.01.2018
(73) Patentinhaber: Selfrag AG, 3210 Kerzers (CH)
(72) Erfinder: KAEPPELER, Johannes, 3177 Laupen (CH); MORACH, Marion Esther, 4654 Lostorf (CH); WEH, Alexander, 78234 Engen (DE); MÜLLER-SIEBERT, Reinhard, 3013 Bern (CH)
(74) Vertreter: Münch, Martin Walter
(86) Internationale Anmeldenummer: PCT/CH2015/000031
(87) Internationale Veröffentlichungsnummer: WO 2016/134489

(56) Entgegenhaltungen:
- DE-A1- 19 545 580
- DE-A1- 19 736 027
- JP-A- H09 192 526
- JP-A- 2003 154 286

## Beschreibung

### TECHNISCHES GEBIET

Die Erfindung betrifft Verfahren zur Fragmentierung und/oder Schwächung eines Materialstücks mittels Hochspannungsentladungen, eine Vorrichtung zur Durchführung des Verfahrens sowie die Verwendung der Vorrichtung zur Fragmentierung und/oder Schwächung von Faserverbundwerkstoffen gemäss den Oberbegriffen der unabhängigen Patentansprüche.

### STAND DER TECHNIK

Aus dem Stand der Technik ist es bekannt, verschiedenste Materialien mittels gepulster Hochspannungsentladungen zu zerkleinern oder derartig zu schwächen, dass diese in einem nachgeschalteten mechanischen Zerkleinerungsprozess einfacher zerkleinert werden können.

Dabei wird diese Technologie nicht nur bei der Rohstoffgewinnung zur Zerkleinerung von spröden Materialien, wie z.B. Erzen oder edelsteinführenden Mineralien, eingesetzt, sondern kommt auch zunehmend in anderen technischen Gebieten zum Einsatz, z.B. zur Zerkleinerung von Rohsiliziumstangen in der Halbleiterindustrie oder zur Zerkleinerung von Elektroschrott zwecks Rückgewinnung von Wertstoffen.

Grundsätzlich eignet sich das Verfahren auch hervorragend für das Recycling von schwerverrottbaren Gegenständen und Bauelementen aus Verbundwerkstoffen, wie z.B. Ski, Snowboard, Karrosserieteile, Windkraftwerksflügel etc. Hier ergibt sich jedoch das Problem, dass die heute verfügbaren Hochspannungsfragmentierungsanlagen eine bestimmte Stückigkeit des zu prozessierenden Materials verlangen, welche aufgrund der Beschaffenheit und Vielfältigkeit solcher Gegenstände nur durch arbeitsintensive individuelle Vorzerkleinerung erreicht werden kann, was mit hohen Kosten verbunden ist und einem industriellen Einsatz dieser Technologie beim Recycling solcher Gegenstände bisher entgegengestanden hat.

Eine derartige Vorrichtung und ein derartiges Verfahren sind aus der Druckschrift JP 2003 154286 bekannt.

### DARSTELLUNG DER ERFINDUNG

Es stellt sich deshalb die Aufgabe, Verfahren und Vorrichtungen zur Fragmentierung und/oder Schwächung von Materialstücken mittels Hochspannungsentladungen zur Verfügung zu stellen, mit denen auch grosse Materialstücke, z.B. Ski, Snowboard, Karrosserieteile oder Windkraftwerksflügel, ohne aufwendige Vorzerkleinerung prozessiert werden können.

Diese Aufgabe wird durch die Gegenstände der unabhängigen Patentansprüche gelöst.

Gemäss diesen betrifft ein erster Aspekt der Erfindung ein Verfahren zur Fragmentierung und/oder Schwächung eines Materialstücks mittels Hochspannungsentladungen. Gemäss diesem Verfahren wird das zu fragmentierende bzw. zu schwächende Materialstück, eingetaucht in eine Prozessflüssigkeit, an einer Matrix aus mehreren Hochspannungselektroden vorbeigeführt, welche mit einem oder mehreren Hochspannungsgeneratoren mit Hochspannungspulsen beaufschlagt werden, so dass es zu Hochspannungsdurchschlägen durch das Materialstück während dem Vorbeiführen desselben an der Matrix aus Hochspannungselektroden kommt. Die Hochspannungselektroden der Matrix sind unabhängig voneinander entlang von unter einem Winkel, bevorzugterweise im Wesentlichen senkrecht, zu der Vorbeiführungsrichtung des Werkstücks verlaufenden, bevorzugterweise parallel zueinander verlaufenden Verschiebeachsen verschiebbar und werden während dem Vorbeiführen des Materialstücks an der Matrix und dem Erzeugen von Hochspannungsdurchschlägen durch das Materialstück derartig entlang ihrer Verschiebeachsen verschoben, dass sie jeweils der Kontur des Materialstücks mit einem bestimmten Abstand folgen oder in Kontakt mit der Oberfläche des Materialstücks dessen Kontur folgen und dabei in die Prozessflüssigkeit eingetaucht sind. Die Verschiebeachsen der Hochspannungselektroden sind bevorzugterweise vertikal orientiert.

Mit dem erfindungsgemässen Verfahren lassen sich grosse Materialstücke unterschiedlichster Formgebung auf einfache Weise und ohne aufwendige Vorzerkleinerung fragmentieren und/oder schwächen.

Bevorzugterweise wird das zu fragmentierende bzw. zu schwächende Materialstück zum Vorbeiführen an der Matrix aus Hochspannungselektroden im Wesentlichen horizontal vorbeigeführt, bevorzugterweise verschoben. Hierdurch ergibt sich der Vorteil, dass die mit Prozessflüssigkeit geflutete Prozesszone lediglich geringfügig höher ausgebildet sein muss als die grösste Dicke des Materialstücks, und dass im Falle eines Verschiebens des Materialstückes die Hochspannungselektroden-Matrix stationär sein kann.

Im letztgenannten Fall eines "Verschiebens" des Materialstücks wird das Materialstück mit Vorteil mittels einer Fördereinrichtung, bevorzugterweise mittels eines Förderbands oder einer Förderkette, an der Matrix aus Hochspannungselektroden vorbeigeführt. Auf diese Wiese kann das Materialstück unter fortschreitender Schwächung/Fragmentierung kontrolliert an der Hochspannungselektroden-Matrix vorbeigeführt werden und können die Fragmentierungs- bzw. Schwächungsprodukte zuverlässig aus der Prozesszone herausgeführt werden.

Dabei ist es in einer Verfahrensvariante bevorzugt, dass die Fördereinrichtung als Gegenelektrode zu den Hochspannungselektroden verwendet wird, welche bevorzugterweise auf Erdpotential liegt, und durch das Beaufschlagen der Hochspannungselektroden mit den Hochspannungspulsen Hochspannungsdurchschläge zwischen den Hochspannungselektroden und dem Förderband durch das Materialstück hindurch erzeugt werden. Auf diese Weise kann besonders intensiv auf das zu fragmentierende bzw. zu schwächende Materialstück eingewirkt werden, da die Hochspannungsdurchschläge das Material über seine gesamte Dicke durchschlagen.

In einer weiteren bevorzugten Ausführungsform des erfindungsgemässen Verfahrens weist jede der Hochspannungselektroden der Matrix mindestens eine eigene, d.h. exklusiv ihr zugeordnete, Gegenelektrode auf, welche bevorzugterweise auf Erdpotential liegt. Diese Gegenelektrode wird jeweils zusammen mit der jeweiligen Hochspannungselektrode entlang deren Verschiebeachse verschoben und ist derartig relativ zur jeweiligen Hochspannungselektrode angeordnet, dass durch das Beaufschlagen der jeweiligen Hochspannungselektrode mit Hochspannungspulsen Hochspannungsdurchschläge zwischen der Hochspannungselektrode und der Gegenelektrode durch das Materialstück hindurch erzeugt werden. Hierdurch ergibt sich der Vorteil, dass die Durchschlagsspannung im Wesentlichen entkoppelt ist von der Dicke des zu fragmentierenden bzw. zu schwächenden Materialstücks, so dass auch dicke Materialstücke bzw. Materialstücke mit stark variierender Dicke ohne weiteres prozessiert werden können. Ein weiterer Vorteil dieser Ausführungsform besteht zudem darin, dass sie grösstmögliche Gestaltungsfreiheit bezüglich der Auflagefläche bzw. der Fördereinrichtung für das zu fragmentierende bzw. zu schwächende Material im Bereich der Prozesszone bietet, weil diese Fläche bzw. Einrichtung hier nicht als Gegenelektrode benötigt wird und somit bezüglich anderer Aspekte besser optimiert werden kann.

Bevorzugterweise weist jede der Hochspannungselektroden der Matrix ihren eigenen Hochspannungsgenerator auf, mit welchem sie unabhängig von den anderen Hochspannungselektroden mit Hochspannungspulsen beaufschlagt wird. Auf diese Weise kann sichergestellt werden, dass alle Zonen der Hochspannungselektroden-Matrix die gleiche Leistung aufweisen oder auch gezielt gesteuert werden, ob, und falls ja, mit welcher Leistung einzelne Zonen der Hochspannungselektroden-Matrix betrieben werden.

Dabei ist es weiter von Vorteil, dass der jeweilige Hochspannungsgenerator jeweils fest mit der Hochspannungselektrode verbunden ist und mit dieser entlang der Verschiebeachse verschoben wird. Auf diese Weise wird eine sichere Verbindung zwischen dem jeweiligen Hochspannungsgenerator und der jeweiligen Hochspannungselektrode gewährleistet und der jeweilige Hochspannungsgenerator und die jeweilige Hochspannungselektrode können als Einheit ausgetauscht und gewartet werden.

Bevorzugterweise wird beim Fragmentieren bzw. Schwächen des Materials fortlaufend der Abstand jeder Hochspannungselektrode der Hochspannungselektroden-Matrix zur Kontur des zu fragmentierenden bzw. zu schwächenden Materials gemessen und die Hochspannungselektroden derart entlang ihrer Verschiebeachsen verschoben, dass der gemessene Abstand der Elektroden jeweils einem bestimmten vorgegebenen Soll-Abstand entspricht.

Ebenfalls bevorzugt ist es, dass beim Fragmentieren bzw. Schwächen des Materials fortlaufend für jede Hochspannungselektrode geprüft wird, ob sich ein Materialstück innerhalb eines bestimmten Abstandsbereichs zur jeweiligen Hochspannungselektrode befindet, und wobei die jeweilige Hochspannungselektrode nur dann mit Hochspannungspulsen beaufschlagt wird, wenn die Prüfung ergibt, dass sich ein Materialstück innerhalb dieses Abstandsbereichs befindet.

Durch diese Massnahmen kann der Prozess energetisch und/oder bezüglich der Einwirkungsleistung optimiert werden.

Die Abstandsmessung und/oder die Prüfung auf das Vorhandensein von Material in einem bestimmten Abstandsbereich erfolgt bevorzugterweise berührungslos, z.B. optisch oder mittels Ultraschall.

In noch einer weiteren bevorzugten Ausführungsform des erfindungsgemässen Verfahrens wird ein Materialstück fragmentiert und/oder geschwächt, dessen Erstreckung in Vorbeiführungsrichtung grösser ist, bevorzugterweise um ein Vielfachens grösser ist, als die Erstreckung der Matrix aus Hochspannungselektroden in dieser Richtung.

In noch einer weiteren bevorzugten Ausführungsform des erfindungsgemässen Verfahrens wird ein Materialstück fragmentiert und/oder geschwächt, welches ein Bauteil oder ein Stück eines Bauteils aus einem Faserverbundwerkstoff ist, bevorzugterweise aus glasfaserverstärktem Kunststoff oder aus kohlenfaserverstärktem Kunststoff.

Bei derartigen Materialstücken treten die Vorteile der Erfindung besonders deutlich zu Tage.

Dabei ist es beim Fragmentieren und/oder Schwächen von derartig grossen Materialstücken aus Faserverbundwerkstoffen weiter bevorzugt, dass das Material beim Vorbeiführen des Materialstücks an der Matrix aus Hochspannungselektroden durch Beaufschlagung mit Hochspannungsdurchschlägen mittels zumindest eines Teils der Hochspannungselektroden der Matrix zuerst geschwächt wird, das geschwächte Material dann unter einer Deformation desselben umgelenkt wird, mit Vorteil derart, dass es sodann im Wesentlichen in horizontaler Richtung weiter geführt wird, und das umgelenkte geschwächte Material sodann durch weitere Beaufschlagung mit Hochspannungsdurchschlägen fragmentiert wird, was bevorzugterweise ebenfalls mittels eines Teils der Hochspannungselektroden der Matrix erfolgt.

Bevorzugterweise wird das Materialstück dabei mit einer nach unten geneigten Bewegungsrichtung der Matrix aus Hochspannungselektroden zugeführt, beim Vorbeiführen an der Matrix durch Beaufschlagung mit Hochspannungsdurchschlägen mittels zumindest eines Teils der Hochspannungselektroden der Matrix geschwächt und das geschwächte Material sodann unter einer Deformation des desselben derartig umgelenkt, dass es nach der Umlenkung in einer weniger nach unten geneigten Bewegungsrichtung weitergeführt wird, bevorzugterweise in einer im Wesentlichen horizontalen Bewegungsrichtung.

Hierdurch wird es möglich, auch sehr lange Materialstücke aus Verbundwerkstoff mit erfindungsgemässen Vorrichtungen mit relativ kurzen und flachen Prozessflüssigkeitsbecken zu prozessieren.

Wird das Materialstück mittels einer Fördereinrichtung an der Matrix aus Hochspannungselektroden vorbeigeführt, so ist es bevorzugt, dass das Umlenken mittels der Fördereinrichtung bewirkt wird. Auf diese Weise kann auf zusätzliche Umlenkeinrichtungen verzichtet werden.

Weiter ist es für den Fall, dass Materialstücke aus Faserverbundwerkstoffen fragmentiert bzw. geschwächt werden, bevorzugt, den Faserverbundwerkstoff derartig zu fragmentieren, dass sich die Kunststoffanteile von den Fasern lösen. Auf diese Weise wird eine Separation der Fasern von den Kunststoffanteilen möglich, was eine materialgerechte Entsorgung und/oder Wiederverwertung, insbesondere der Fasern, erlaubt.

Ein zweiter Aspekt der Erfindung betrifft eine Vorrichtung zur Durchführung des Verfahrens gemäss dem ersten Aspekt der Erfindung. Erfindungsgemäss umfasst die Vorrichtung eine Matrix aus mehreren Hochspannungselektroden, welche unabhängig voneinander entlang von bevorzugterweise parallelen, bevorzugterweise vertikal orientierten Verschiebeachsen verschiebbar sind.

Mit einer solchen Vorrichtung lassen sich grosse Materialstücke unterschiedlichster Formgebung auf einfache Weise und ohne aufwendige Vorzerkleinerung gemäss dem erfindungsgemässen Verfahren prozessieren.

Bevorzugterweise weist jede der Hochspannungselektroden der Matrix ihren eigenen Hochspannungsgenerator auf, mit welchem sie unabhängig von den anderen Hochspannungselektroden mit Hochspannungspulsen beaufschlagt werden kann. Auf diese Weise kann sichergestellt werden, dass alle Zonen der Hochspannungselektroden-Matrix die gleiche Leistung aufweisen oder auch gezielt gesteuert werden, ob und mit welcher Leistung einzelne Zonen der Hochspannungselektroden-Matrix betrieben werden.

Dabei ist es weiter von Vorteil, dass der jeweilige Hochspannungsgenerator jeweils fest mit der Hochspannungselektrode verbunden ist und mit dieser entlang der Verschiebeachse verschoben werden kann. Auf diese Weise wird eine sichere Verbindung zwischen dem jeweiligen Hochspannungsgenerator und der jeweiligen Hochspannungselektrode gewährleistet und der Hochspannungsgenerator und die Hochspannungselektrode können als Einheit ausgetauscht und gewartet werden.

Mit Vorteil umfasst die Vorrichtung eine Maschinensteuerung, mittels welcher im bestimmungsgemässen Betrieb während dem Vorbeiführen des Materialstücks an der Matrix aus Hochspannungselektroden und dem Erzeugen von Hochspannungsdurchschlägen durch das Materialstück die Hochspannungselektroden automatisch derartig entlang ihrer Verschiebeachsen verschoben werden können, dass sie jeweils der Kontur des Materialstücks mit einem bestimmten vorgegebenen Soll-Abstand folgen oder jeweils in Kontakt mit der Oberfläche des Materialstücks der Kontur des Materialstücks folgen.

Bevorzugterweise ist diese Maschinensteuerung zudem derartig ausgebildet, dass mit ihr im bestimmungsgemässen Betrieb während dem Vorbeiführen des Materialstücks an der Matrix aus Hochspannungselektroden fortlaufend für jede Hochspannungselektrode geprüft werden kann, ob sich ein Materialstück innerhalb eines bestimmten vorgegebenen Abstandsbereichs zur jeweiligen Hochspannungselektrode befindet, und dass mit ihr die Beaufschlagung der jeweilige Hochspannungselektrode mit Hochspannungspulsen ausgesetzt werden kann, wenn die Prüfung ergibt, dass sich kein Materialstück innerhalb dieses Abstandsbereichs befindet.

Durch diese Betriebsarten der Maschinensteuerung kann der Prozess optimiert werden.

In einer weiteren bevorzugten Ausführungsform umfasst die Vorrichtung eine Fördereinrichtung, bevorzugterweise in Form eines Förderbands oder einer Förderkette, angeordnet in einem mit einer Prozessflüssigkeit befüllbaren Becken, mit welchem ein zu fragmentierendes und/oder zu schwächendes Materialstück, eingetaucht in eine Prozessflüssigkeit, bestimmungsgemäss an der Matrix aus Hochspannungselektroden in einer im Wesentlichen senkrecht zu den Verschiebeachsen der Hochspannungselektroden verlaufenden Richtung vorbeigeführt werden kann. Auf diese Weise kann das Materialstück unter fortschreitender Schwächung/Fragmentierung kontrolliert an der Hochspannungselektroden-Matrix vorbeigeführt werden die Fragmentierungs- bzw. Schwächungsprodukte können sicher und zuverlässig aus der Prozesszone herausgeführt werden.

Dabei ist es weiter bevorzugt, dass die Vorrichtung eine Zuführungseinrichtung für das zu fragmentierende bzw. zu schwächende Material aufweist, bevorzugterweise in Form einer Rollenrampe, mit welcher dieses Material mit einer nach unten geneigten Zuführungsrichtung in einen zwischen der Fördereinrichtung und der Matrix aus Hochspannungselektroden gebildeten Bereich zuführbar ist.

Die Zuführungsrichtung der Zuführungseinrichtung verläuft dabei bevorzugterweise zusammen mit der Förderrichtung der Fördereinrichtung in einer gemeinsamen vertikalen Ebene unter einem Winkel zur Förderrichtung der Fördereinrichtung, und zwar bevorzugterweise unter einem Winkel von grösser als 15°.

Im letztgenannten Fall ist es weiter bevorzugt, dass die Vorrichtung zudem eine Niederhaltevorrichtung umfasst, z.B. mit einer oder mehreren Andruckrollen oder -walzen, mit welcher das zu fragmentierende und/oder zu schwächende Materialstück während dem Zuführen gegen ein Abheben von der Zuführungseinrichtung gesichert werden kann, derart, dass es, um den zwischen der Fördereinrichtung und der Matrix aus Hochspannungselektroden gebildeten Bereich (Prozessraum) vollständig zu durchlaufen, in diesem Bereich unter einer Deformation durch die Fördereinrichtung umgelenkt wird.

Hierdurch wird es möglich, lange Materialstücke aus Verbundwerkstoffen in erfindungsgemässen Vorrichtungen mit relativ kurzen und flachen Prozessflüssigkeitsbecken zu prozessieren.

In einer bevorzugten Variante der zuvor beschriebenen bevorzugten Ausführungsform der Vorrichtung mit einer Fördereinrichtung, mit welcher ein zu fragmentierendes und/oder zu schwächendes Materialstück an der Matrix aus Hochspannungselektroden vorbeigeführt werden kann, dient die Fördereinrichtung im bestimmungsgemässen Betrieb als Gegenelektrode zu den Hochspannungselektroden, so dass durch ein Beaufschlagen der Hochspannungselektroden mit Hochspannungspulsen Hochspannungsdurchschläge zwischen den Hochspannungselektroden und dem Förderband durch das zu fragmentierende und/oder zu schwächende Materialstück hindurch erzeugbar sind. Mit derartigen Vorrichtungen kann besonders intensiv auf das zu fragmentierende bzw. zu schwächende Materialstück eingewirkt werden, da Hochspannungsdurchschläge über die gesamte Materialdicke durch das Material erzeugt werden können.

In noch einer weiteren bevorzugten Ausführungsform der erfindungsgemässen Vorrichtung weist jede der Hochspannungselektroden der Matrix mindestens eine eigene Gegenelektrode auf, welche bevorzugterweise auf Erdpotential liegt und welche zusammen mit dieser Hochspannungselektrode entlang deren Verschiebeachse verschoben werden kann und derartig relativ zur dieser angeordnet ist, dass durch das Beaufschlagen der jeweiligen Hochspannungselektrode mit Hochspannungspulsen Hochspannungsdurchschläge zwischen der Hochspannungselektrode und der Gegenelektrode durch ein angrenzend an diese angeordnetes Materialstück hindurch erzeugt werden können. Hierdurch ergibt sich der Vorteil, dass die Durchschlagsspannung im Wesentlichen entkoppelt ist von der Dicke des zu fragmentierenden bzw. zu schwächenden Materialstücks, so dass auch dicke Materialstücke bzw. Materialstücke mit stark variierender Dicke ohne Weiteres prozessiert werden können. Ein weiterer Vorteil dieser Ausführungsform besteht darin, dass sie grösstmögliche Gestaltungsfreiheit bezüglich der Auflagefläche bzw. der Fördereinrichtung für das das zu fragmentierende bzw. zu schwächende Material im Bereich der Prozesszone bietet, weil diese Fläche bzw. diese Einrichtung hier nicht als Gegenelektrode benötigt wird.

In noch einer bevorzugten Variante der zuvor beschriebenen bevorzugten Ausführungsform der Vorrichtung mit einer Fördereinrichtung, mit welcher ein zu fragmentierendes und/oder zu schwächendes Materialstück an der Matrix aus Hochspannungselektroden vorbeigeführt werden kann, weist die Vorrichtung, in Materialdurchlaufrichtung gesehen stromabwärts von der Matrix aus Hochspannungselektroden, eine Separationseinrichtung zur Trennung von faserartigen und partikelartigen Fragmentationsprodukten auf. Auf diese Weise wird nach der Fragmentierung von Faserverbundwerkstoffen eine Separation der Fasern von den Kunststoffanteilen ermöglicht, was eine materialgerechte Entsorgung und/oder Wiederverwertung, insbesondere der Fasern, erlaubt.

In noch einer weiteren bevorzugten Ausführungsform der erfindungsgemässen Vorrichtung ist die Hochspannungselektroden-Matrix aus mehreren in bestimmungsgemässer Vorbeiführungsrichtung des zu fragmentierenden bzw. zu schwächenden Materialstücks gesehen hintereinander angeordneten Reihen von Hochspannungselektroden gebildet, wobei bei direkt hintereinander liegenden Reihen die Hochspannungselektroden jeweils versetzt angeordnet sind. Auf diese Weise lässt sich der Abstand der Hochspannungselektroden in bestimmungsgemässer Vorbeiführungsrichtung des zu fragmentierenden bzw. zu schwächenden Materialstücks gesehen minimieren und damit die Einwirkungsdichte maximieren.

Ein dritter Aspekt der Erfindung betrifft die Verwendung der Vorrichtung gemäss dem zweiten Aspekt der Erfindung zur Fragmentierung und/oder Schwächung von Faserverbundwerkstoffen, insbesondere von glasfaserverstärktem oder kohlefaserverstärktem Kunststoff. Bei solchen Verwendungen treten die Vorteile der Erfindung besonders deutlich zu Tage.

### KURZE BESCHREIBUNG DER ZEICHNUNGEN

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 einen Vertikalschnitt durch eine erste erfindungsgemässe Vorrichtung;
Fig. 2 einen Horizontalschnitt durch die erste erfindungsgemässe Vorrichtung entlang der Linie A-A in Fig. 1;
Fig. 3 einen Vertikalschnitt durch die erste erfindungsgemässe Vorrichtung entlang der Linie B-B in Fig. 1 beim Fragmentieren eines plattenförmigen Bauteils;
Fig. 4 eine Darstellung wie Fig. 3 beim Fragmentieren eines profilierten Bauteils;
Fig. 5 eine Seitenansicht einer der Elektrodenanordnungen der ersten erfindungsgemässen Vorrichtung;
Fig. 6 eine Seitenansicht einer Variante der Hochspannungselektrode aus Fig. 5; und
Fig. 7 eine Darstellung wie Fig. 1 durch eine zweite erfindungsgemässe Vorrichtung.

### WEGE ZUR AUSFÜHRUNG DER ERFINDUNG

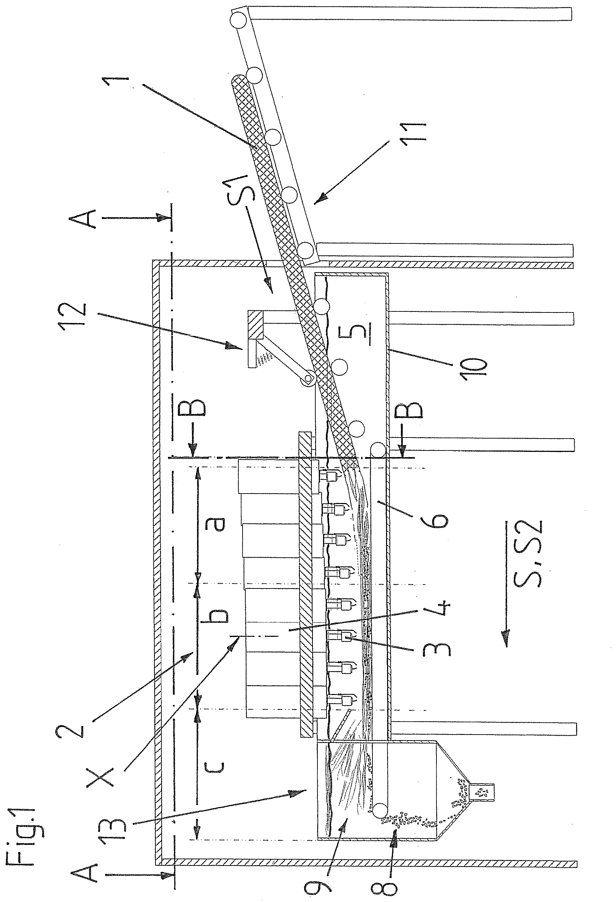

Fig. 1 zeigt eine erste erfindungsgemässe Vorrichtung zum Fragmentieren von grossen Materialstücken 1 aus Faserverbundwerkstoffen in einem Vertikalschnitt entlang der Materialdurchlaufrichtung S.

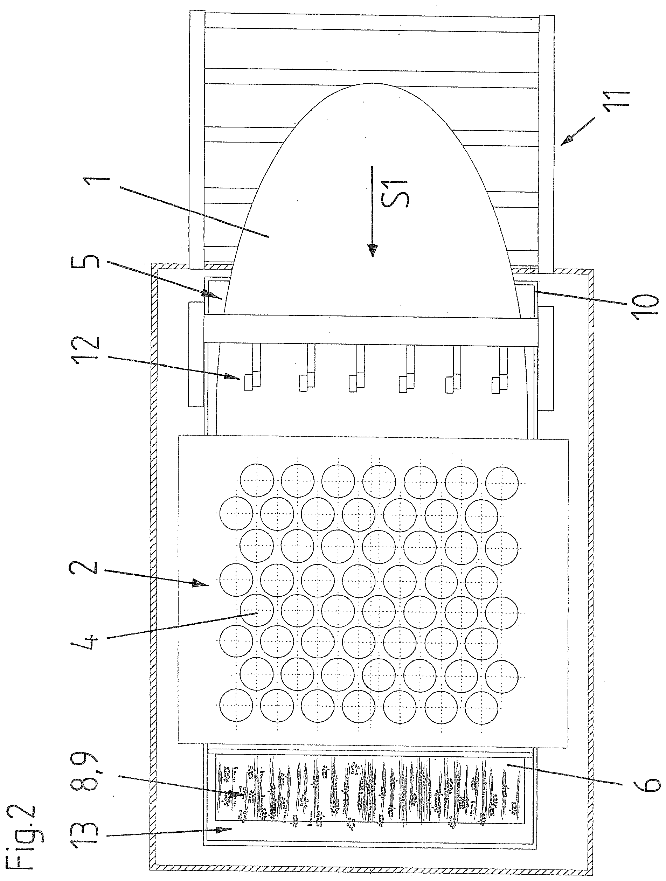

Wie in Zusammenschau mit Fig. 2 zu erkennen ist, welche einen Horizontalschnitt durch die Vorrichtung entlang der Linie A-A in Fig. 1 zeigt, besteht das Kernstück der Vorrichtung aus einer Matrix 2 aus insgesamt sechsundfünfzig Hochspannungselektroden 3 (in den Figuren ist der Übersichtlichkeit halber jeweils nur eine der Hochspannungselektroden mit der Bezugsziffer 3 versehen), welche in Materialdurchlaufrichtung S gesehen in acht hintereinander angeordneten Reihen mit je sieben Hochspannungselektroden 3 angeordnet sind, wobei die Hochspannungselektroden 3 von direkt hintereinander liegenden Reihen jeweils versetzt angeordnet sind.

Die Hochspannungselektroden 3 sind unabhängig voneinander entlang von parallelen, vertikal orientierten Verschiebeachsen X (in den Figuren ist der Übersichtlichkeit halber jeweils nur die Verschiebeachse einer der Hochspannungselektroden eingezeichnet und mit dem Bezugsbuchstaben X versehen) verschiebbar.

Jede der Hochspannungselektroden 3 weist einen eigenen Hochspannungsgenerator 4 auf (in den Figuren ist der Übersichtlichkeit halber jeweils nur der Hochspannungsgenerator einer der Hochspannungselektroden mit der Bezugsziffer 4 versehen), mittels welchem sie im dargestellten bestimmungsgemässen Betrieb unabhängig von den anderen Hochspannungselektroden 3 mit Hochspannungspulsen beaufschlagt wird. Die Hochspannungsgeneratoren 4 sind jeweils direkt über der jeweiligen ihnen zugeordneten Hochspannungselektrode 3 angeordnet, fest mit dieser verbunden und zusammen mit dieser entlang der Verschiebeachse X dieser Hochspannungselektrode 3 verschiebbar.

Unter der Matrix 2 aus Hochspannungselektroden 3 befindet sich, angeordnet in einem mit Wasser 5 (Prozessflüssigkeit) gefluteten Becken 10, ein Förderband 6, mittels welchem das zu fragmentierende Materialstück 1, im vorliegenden Fall ein Surfbrett 1 aus glasfaserverstärktem Kunststoff, in Materialdurchlaufrichtung S an den Hochspannungselektroden 3 der Matrix 2 vorbeigeführt wird, wobei das Material im Bereich unterhalb der Hochspannungselektroden 3 in das im Becken 10 befindliche Wasser 5 eingetaucht ist, ebenso wie die darüber angeordneten Hochspannungselektroden 3.

Weiter umfasst die Vorrichtung eine Rollenrampe 11, mit welcher das zu fragmentierende Materialstück 1 mit einer nach unten geneigten Zuführungsrichtung S1 in die zwischen dem Förderband 6 und der Matrix 2 aus den Hochspannungselektroden 3 gebildete Prozesszone zugeführt wird, unter einem in einer vertikalen Ebene liegenden Winkel zur Förderrichtung S2 des Förderbandes 6 von etwa 15°.

Oberhalb der Rollenrampe 11 ist eine Niederhaltevorrichtung 12 mit mehreren Andruckrollen angeordnet, mit welcher das zu fragmentierende Materialstück 1 während dem Zuführen zur Prozesszone auf die Rollenrampe 11 gedrückt wird, derart, dass es, um die zwischen dem Förderband 6 und den Hochspannungselektroden 3 gebildete Prozesszone vollständig zu durchlaufen, im vorderen Bereich der Prozesszone durch das Förderband 6 von der Zuführungsrichtung S1 in die Förderrichtung S2 des Förderbandes 6 umgelenkt und dabei deformiert wird.

In Materialdurchlaufrichtung S bzw. in Förderrichtung S2 des Förderbandes 6 gesehen stromabwärts von der Matrix 2 aus Hochspannungselektroden 3 ist eine Separationseinrichtung 13 angeordnet, mittels welcher die Fasern 9 von den Kunststoffpartikeln 8 abgeschieden werden.

Beim Durchlaufen der zwischen der Matrix 2 aus Hochspannungselektroden 3 und dem Förderband 6 gebildeten Prozesszone wird zuerst die feste mechanische Struktur des Materialstücks 1 in einem ersten Prozesszonenabschnitt a aufgeweicht (geschwächt), zur Ermöglichung der Umlenkung des Materials durch das Förderband 6 von der Zuführungsrichtung S1 in die Förderrichtung S2 des Förderbandes 6 unter einer Deformation des Materials. Sodann wird das Material in einem zweiten Prozesszonenabschnitt b soweit fragmentiert, dass sich die Fasern 9 von der Kunststoffmatrix 8 lösen.

Sodann werden in einem dritten Abschnitt c, welcher im Wesentlichen von der Separationseinrichtung 13 gebildet wird, die Fasern 9 von den Kunststoffpartikeln 8 getrennt.

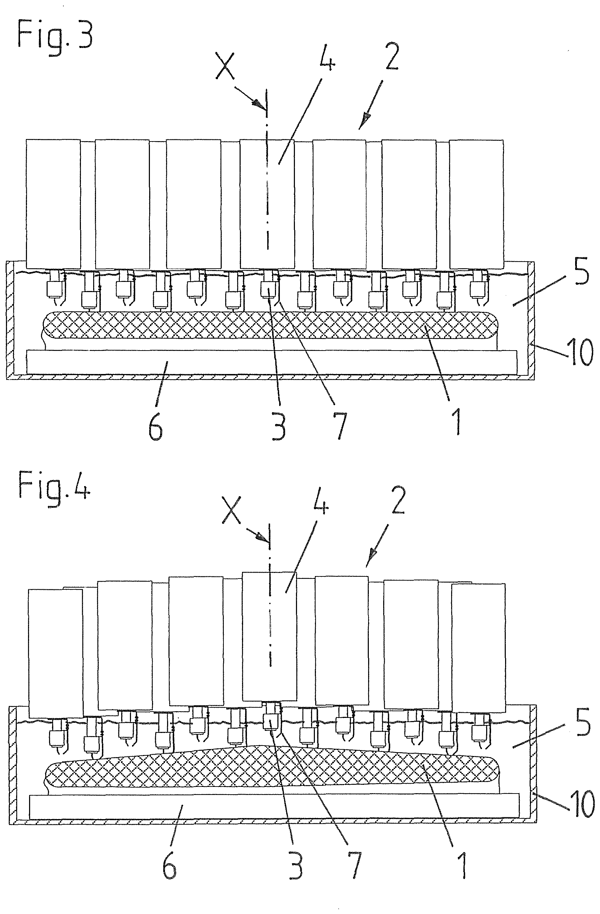

Zur Steuerung des Fragmentierungsprozesses weist die Vorrichtung eine Maschinensteuerung (nicht gezeigt) auf, mittels welcher im dargestellten Betrieb, während dem Vorbeiführen des Materialstücks 1 an den Hochspannungselektroden 3 und dem Erzeugen von Hochspannungsdurchschlägen durch das Materialstück 1, die Hochspannungselektroden 3 automatisch derartig entlang ihrer Verschiebeachsen x verschoben werden, dass sie jeweils der Kontur des Materialstücks 1 mit einem bestimmten Abstand folgen. Wie aus einer Zusammenschau von Fig. 1 mit den Figuren 3 und 4 hervorgeht, welche Vertikalschnitte durch die Vorrichtung entlang der Linie B-B in Fig. 1 beim Fragmentieren eines plattenförmigen Bauteils 1 (Fig. 3) und eines profilierten Bauteils 1 (Fig. 4) zeigen, erfolgt diese Abstandsregelung nicht reihenweise, sondern individuell für jede Hochspannungselektrode 3, so dass sich die Matrix 2 aus Hochspannungselektroden 3 sowohl in Materialdurchlaufrichtung S als auch quer zur Materialdurchlaufrichtung an die jeweilige Kontur des zu fragmentierenden Materialstückes 1 anpasst.

Auch prüft die Anlagensteuerung fortlaufend für jede Hochspannungselektrode 3, ob sich ein Materialstück 1 innerhalb eines bestimmten Abstandsbereichs zur jeweiligen Hochspannungselektrode 3 befindet, und beaufschlagt die jeweilige Hochspannungselektrode 3 nur dann mit Hochspannungspulsen, wenn sich ein Materialstück 1 innerhalb dieses Abstandsbereichs befindet.

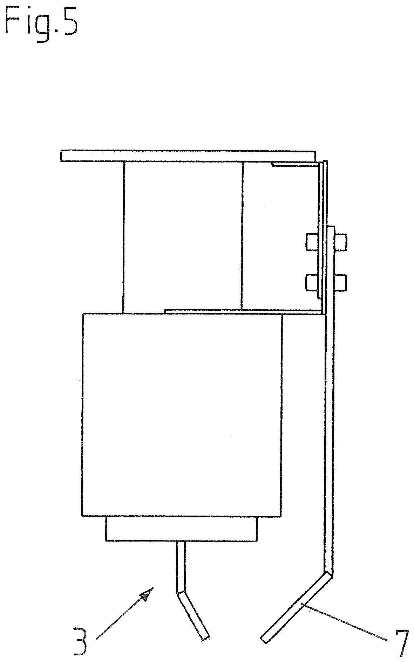

Wie aus Fig. 5 ersichtlich ist, welche eine der Elektrodenanordnungen der Vorrichtung in der Seitenansicht zeigt, weist jede der Hochspannungselektroden 3 der Matrix 2 eine eigene auf Erdpotential liegende Gegenelektrode 7 auf, welche zusammen mit der jeweiligen Hochspannungselektrode 3 entlang der Verschiebeachse X verschiebbar ist und derartig relativ zur jeweiligen Hochspannungselektrode 3 angeordnet ist, dass im dargestellten Betrieb durch das Beaufschlagen der jeweiligen Hochspannungselektrode 3 mit Hochspannungspulsen Hochspannungsdurchschläge zwischen der Hochspannungselektrode 3 und der ihr zugeordneten Gegenelektrode 7 durch das Materialstück 1 hindurch erzeugt werden.

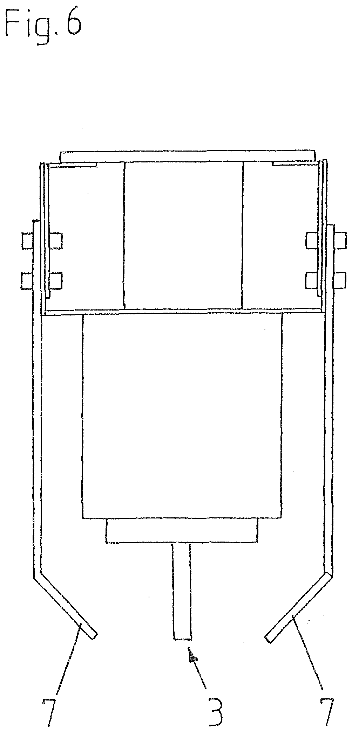

Fig. 6 zeigt eine Seitenansicht einer Hochspannungselektrode 3, welche sich von der in Fig. 5 gezeigten im Wesentlichen dadurch unterscheidet, dass sie zwei identische, sich spiegelbildlich gegenüberliegende Gegenelektroden 7 aufweist. Ein weiterer Unterschied besteht darin, dass diese Hochspannungselektrode 3 eine gerade Elektrodenspitze aufweist.

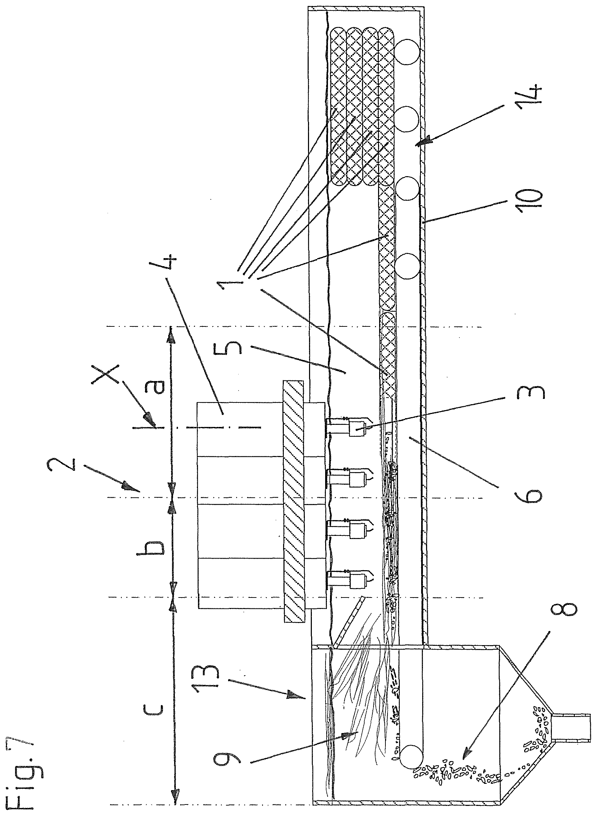

Fig. 7 zeigt eine zweite erfindungsgemässe Vorrichtung zum Fragmentieren von grossen Materialstücken 1 aus Faserverbundwerkstoffen in einem Vertikalschnitt entlang der Materialdurchlaufrichtung S.

Diese Vorrichtung unterscheidet sich lediglich dahingehend von der zuvor beschriebenen ersten erfindungsgemässen Vorrichtung, dass sie eine vierreihige Matrix 2 aus Hochspannungselektroden 3 aufweist und zum Zuführen der zu fragmentierenden Materialstücke 1 keine schräge Rollenrampe 11 mit Niederhaltevorrichtung 12 aufweist, sondern stattdessen einen am Boden des (hier verlängerten) Beckens 10 angeordneten Rollentisch 14. Die Transportebenen dieses Rollentisches 14 und des Förderbandes 6 fallen zusammen, so dass die Materialstücke 1 ohne Richtungsänderung und ohne Deformation zur Prozesszone geführt und durch diese hindurchgeführt werden.

Wie zu erkennen ist, werden die zu fragmentierenden Materialstücke 1 hier stapelweise auf dem Rollentisch 14 bereitgestellt und dann nacheinander der Prozesszone zugeführt.

Während in der vorliegenden Anmeldung bevorzugte Ausführungen der Erfindung beschrieben sind, ist klar darauf hinzuweisen, dass die Erfindung nicht auf diese beschränkt ist und auch in anderer Weise innerhalb des Umfangs der nun folgenden Ansprüche ausgeführt werden kann.

## Patentansprüche

1. Verfahren zur Fragmentierung und/oder Schwächung eines Materialstücks (1) mittels Hochspannungsentladungen, umfassend die Schritte:
a) Bereitstellen einer Matrix (2) aus mehreren Hochspannungselektroden (3), welche unabhängig voneinander entlang von insbesondere parallelen, insbesondere vertikal orientierten Verschiebeachsen (X) verschiebbar sind und jeweils einem gemeinsamen oder jeweils einem eigenen Hochspannungsgenerator (4) zugeordnet sind, mittels welchem sie mit Hochspannungspulsen beaufschlagbar sind;
b) Bereitstellen eines zu fragmentierenden und/oder zu schwächenden Materialstücks (1) eingetaucht in eine Prozessflüssigkeit (5);
c) Vorbeiführen des Materialstücks (1) an der Matrix (2) aus Hochspannungselektroden (3) in einer unter einem Winkel, insbesondere im Wesentlichen senkrecht, zu den Verschiebeachsen (X) der Hochspannungselektroden (3) verlaufenden Richtung; **gekennzeichnet durch**
d) Erzeugen von Hochspannungsdurchschlägen durch das Materialstück (1) während dem Vorbeiführen desselben an der Matrix (2) aus Hochspannungselektroden (3) durch Beaufschlagung der Hochspannungselektroden (3) mit Hochspannungspulsen,
wobei während dem Vorbeiführen des Materialstücks (1) an der Matrix (2) aus Hochspannungselektroden (3) und dem Erzeugen von Hochspannungsdurchschlägen durch das Materialstück die Hochspannungselektroden (3) jeweils derartig entlang ihrer Verschiebeachsen (X) verschoben werden, dass sie jeweils der Kontur des Materialstücks (1) mit einem bestimmten Abstand folgen oder in Kontakt mit der Oberfläche des Materialstücks (1) dessen Kontur folgen und dabei in die Prozessflüssigkeit (5) eingetaucht sind.

2. Verfahren nach Anspruch 1, wobei das Materialstück (1) zum Vorbeiführen an der Matrix (2) aus Hochspannungselektroden (3) im Wesentlichen horizontal vorbeigeführt, insbesondere horizontal verschoben wird.

3. Verfahren nach Anspruch 2, wobei das Materialstück (1) mittels einer Fördereinrichtung (6), insbesondere mittels eines Förderbands (6) oder einer Förderkette, an der Matrix (2) aus Hochspannungselektroden (3) vorbeigeführt wird.

4. Verfahren nach Anspruch 3, wobei die Fördereinrichtung als Gegenelektrode zu den Hochspannungselektroden dient und durch das Beaufschlagen der Hochspannungselektroden mit den Hochspannungspulsen Hochspannungsdurchschläge zwischen den Hochspannungselektroden und dem Förderband durch das Materialstück hindurch erzeugt werden.

5. Verfahren nach einem der Ansprüche 1 bis 3, wobei jeder Hochspannungselektrode (3) mindestens eine eigene Gegenelektrode (7) zugeordnet ist, welche zusammen mit der jeweiligen Hochspannungselektrode (3) entlang der Verschiebeachse (X) verschoben wird und derartig relativ zur jeweiligen Hochspannungselektrode (3) angeordnet ist, dass durch das Beaufschlagen der jeweiligen Hochspannungselektrode (3) mit Hochspannungspulsen Hochspannungsdurchschläge zwischen der Hochspannungselektrode (3) und der Gegenelektrode (7) durch das Materialstück (1) hindurch erzeugt werden.

6. Verfahren nach einem der vorangehenden Ansprüche, wobei jeder Hochspannungselektrode (3) ein eigener Hochspannungsgenerator (4) zugeordnet ist, mit welchem diese unabhängig von den anderen Hochspannungselektroden (3) mit Hochspannungspulsen beaufschlagt wird.

7. Verfahren nach Anspruch 6, wobei der Hochspannungsgenerator (4) jeweils fest mit der Hochspannungselektrode (3) verbunden ist und mit dieser entlang der Verschiebeachse (X) verschoben wird.

8. Verfahren nach einem der vorangehenden Ansprüche, wobei fortlaufend der Abstand jeder Hochspannungselektrode (3) zur Kontur des Materialstücks (1) gemessen wird, insbesondere berührungslos, und die Hochspannungselektrode (3) derart entlang der Verschiebeachse (X) verschoben wird, dass der gemessene Abstand einem bestimmten Soll-Abstand entspricht.

9. Verfahren nach einem der vorangehenden Ansprüche, wobei fortlaufend für jede Hochspannungselektrode (3) geprüft wird, insbesondere berührungslos, ob sich ein Materialstück (1) innerhalb eines bestimmten Abstandsbereichs zur jeweiligen Hochspannungselektrode (3) befindet, und wobei die jeweilige Hochspannungselektrode (3) nur dann mit Hochspannungspulsen beaufschlagt wird, wenn die Prüfung ergibt, dass sich ein Materialstück (1) innerhalb dieses Abstandsbereichs befindet.

10. Verfahren nach einem der vorangehenden Ansprüche, wobei ein Materialstück (1) fragmentiert und/- oder geschwächt wird, dessen Erstreckung in Vorbeiführungsrichtung (S) grösser ist, insbesondere um ein Vielfachens grösser ist, als die Erstreckung der Matrix (2) aus Hochspannungselektroden (3) in dieser Richtung (S).

11. Verfahren nach einem der vorangehenden Ansprüche, wobei das Materialstück (1) ein Bauteil oder ein Stück eines Bauteils aus einem Faserverbundwerkstoff ist, insbesondere aus glasfaserverstärktem Kunststoff oder aus kohlefaserverstärktem Kunststoff.

12. Verfahren nach Anspruch 10 und nach Anspruch 11, wobei das Material des Materialstücks (1) beim Vorbeiführen des Materialstücks (1) an der Matrix (2) aus Hochspannungselektroden (3) durch Beaufschlagung mit Hochspannungsdurchschlägen mittels zumindest eines Teils der Hochspannungselektroden (3) der Matrix (2) geschwächt wird, wobei das geschwächte Material unter einer Deformation desselben umgelenkt wird, insbesondere derart, dass es sodann im Wesentlichen in horizontaler Richtung weiter geführt wird, und wobei das umgelenkte geschwächte Material durch weitere Beaufschlagung mit Hochspannungsdurchschlägen fragmentiert wird.

13. Verfahren nach Anspruch 12, wobei die weitere Beaufschlagung des umgelenkten geschwächten Materials mit Hochspannungsdurchschlägen zur Fragmentierung des Materials ebenfalls mittels eines Teils der Hochspannungselektroden (3) der Matrix (2) erfolgt.

14. Verfahren nach einem der Ansprüche 12 bis 13, wobei das Materialstück (1) mit einer nach unten geneigten Bewegungsrichtung (S1) der Matrix (2) aus Hochspannungselektroden (3) zugeführt wird und das Material des Materialstücks (1) beim Vorbeiführen an der Matrix (2) aus Hochspannungselektroden (3) nach der Schwächung durch Beaufschlagung mit Hochspannungsdurchschlägen mittels zumindest eines Teils der Hochspannungselektroden (3) der Matrix (2) unter einer Deformation des Materials derartig umgelenkt wird, dass es nach der Umlenkung in einer weniger nach unten geneigten Bewegungsrichtung (S2) weitergeführt wird, insbesondere in einer im Wesentlichen horizontalen Bewegungsrichtung.

15. Verfahren nach Anspruch 3 und nach einem der Ansprüche 12 bis 14, wobei das Umlenken mittels der Fördereinrichtung (6) bewirkt wird.

16. Verfahren nach einem der Ansprüche 11 bis 15, wobei der Faserverbundwerkstoff derartig fragmentiert wird, dass sich die Kunststoffanteile (8) von den Fasern (9) trennen, und insbesondere, wobei anschliessend die Fasern (9) durch Separation von den Kunststoffanteilen (8) ganz oder teilweise getrennt werden.

17. Vorrichtung zur Durchführung des Verfahrens nach einem der vorangehenden Ansprüche, umfassend eine Matrix (2) aus mehreren Hochspannungselektroden (3), **dadurch gekennzeichnet, dass** diese unabhängig voneinander entlang von insbesondere parallelen, insbesondere vertikal orientierten Verschiebeachsen (X) verschiebbar sind.

18. Vorrichtung nach Anspruch 17, wobei jeder Hochspannungselektrode (3) ein eigener Hochspannungsgenerator (4) zugeordnet ist, mit welchem diese unabhängig von den anderen Hochspannungselektroden (3) mit Hochspannungspulsen beaufschlagbar ist.

19. Vorrichtung nach Anspruch 18, wobei der Hochspannungsgenerator (4) jeweils fest mit der Hochspannungselektrode (3) verbunden ist und mit dieser entlang der Verschiebeachse (X) verschiebbar ist.

20. Vorrichtung nach einem der Ansprüche 17 bis 19, des Weiteren umfassend eine Maschinensteuerung, mittels welcher im bestimmungsgemässen Betrieb während dem Vorbeiführen des Materialstücks (1) an der Matrix (2) aus Hochspannungselektroden (3) und dem Erzeugen von Hochspannungsdurchschlägen durch das Materialstück (1) die Hochspannungselektroden (3) automatisch derartig entlang ihrer Verschiebeachsen (X) verschoben werden können, dass sie jeweils der Kontur des Materialstücks (1) mit einem bestimmten Abstand folgen oder jeweils in Kontakt mit der Oberfläche des Materialstücks (1) der Kontur des Materialstücks (1) folgen.

21. Vorrichtung nach Anspruch 20, wobei die Maschinensteuerung ausgebildet ist um im bestimmungsgemässen Betrieb während dem Vorbeiführen des Materialstücks (1) an der Matrix (2) aus Hochspannungselektroden (3) fortlaufend für jede Hochspannungselektrode (3) zu prüfen, ob sich ein Materialstück (1) innerhalb eines bestimmten Abstandsbereichs zur jeweiligen Hochspannungselektrode (3) befindet, und die jeweilige Hochspannungselektrode (3) nur dann mit Hochspannungspulsen zu beaufschlagen, wenn die Prüfung ergibt, dass sich ein Materialstück (1) innerhalb dieses Abstandsbereichs befindet.

22. Vorrichtung nach einem der Ansprüche 17 bis 21, des Weiteren umfassend eine Fördereinrichtung (6), insbesondere in Form eines Förderbands (6) oder einer Förderkette, angeordnet in einem mit einer Prozessflüssigkeit (5) befüllbaren Becken (10), mit welcher ein zu fragmentierendes und/oder zu schwächendes Materialstück (1), eingetaucht in eine Prozessflüssigkeit (5), bestimmungsgemäss an der Matrix (2) aus Hochspannungselektroden (3) in einer im Wesentlichen senkrecht zu den Verschiebeachsen (X) der Hochspannungselektroden (3) verlaufenden Richtung (S, S2) vorbeigeführt werden kann.

23. Vorrichtung nach Anspruch 22, des Weiteren umfassend eine Zuführungseinrichtung (11), insbesondere in Form einer Rollenrampe (11), mit welcher das zu fragmentierende und/oder zu schwächende Materialstück (1) mit einer nach unten geneigten Zuführungsrichtung (S1) in einen zwischen der Fördereinrichtung (6) und der Matrix (2) aus Hochspannungselektroden (3) gebildeten Bereich zuführbar ist.

24. Vorrichtung nach Anspruch 23, wobei die Zuführungsrichtung (S1) der Zuführungseinrichtung (11) in einer vertikalen Ebene unter einem Winkel zur Förderrichtung (S2) der Fördereinrichtung (6) verläuft, insbesondere unter einem Winkel von grösser als 15°.

25. Vorrichtung nach einem der Ansprüche 23 bis 24, des Weiteren umfassend eine Niederhaltevorrichtung (12), insbesondere mit einer oder mehrerer Andruckrollen, mit welcher das zu fragmentierende und/oder zu schwächende Materialstück (1) während dem Zuführen gegen ein Abheben von der Zuführungseinrichtung (11) gesichert wird, derart, dass es, um den zwischen der Fördereinrichtung (6) und der Matrix (2) aus Hochspannungselektroden (3) gebildeten Bereich vollständig zu durchlaufen, in diesem Bereich infolge einer Umlenkung durch die Fördereinrichtung (6) deformiert wird.

26. Vorrichtung nach einem der Ansprüche 22 bis 25, wobei die Fördereinrichtung im bestimmungsgemässen Betrieb als Gegenelektrode zu den Hochspannungselektroden dient und durch das Beaufschlagen der Hochspannungselektroden mit den Hochspannungspulsen Hochspannungsdurchschläge zwischen den Hochspannungselektroden und dem Förderband durch das zu fragmentierende und/oder zu schwächende Materialstück hindurch erzeugbar sind.

27. Vorrichtung nach einem der Ansprüche 17 bis 25, wobei jeder Hochspannungselektrode (3) eine eigene Gegenelektrode (7) zugeordnet ist, welche zusammen mit der jeweiligen Hochspannungselektrode (3) entlang der Verschiebeachse (X) verschiebbar ist und derartig relativ zur jeweiligen Hochspannungselektrode (3) angeordnet ist, dass im bestimmungsgemässen Betrieb durch das Beaufschlagen der jeweiligen Hochspannungselektrode (3) mit Hochspannungspulsen Hochspannungsdurchschläge zwischen der Hochspannungselektrode (3) und der ihr zugeordneten Gegenelektrode (7) durch das zu fragmentierende und/oder zu schwächende Materialstück (1) hindurch erzeugbar sind.

28. Vorrichtung nach einem der Ansprüche 17 bis 27, des Weiteren umfassend, angeordnet in Förderrichtung (S, S2) der Fördereinrichtung (6) gesehen stromabwärts von der Matrix (2) aus Hochspannungselektroden (3), eine Separationseinrichtung (13) zur Trennung von faserartigen (9) und partikelartigen (8) Fragmentationsprodukten.

29. Vorrichtung nach einem der Ansprüche 17 bis 28, wobei die Matrix (2) aus Hochspannungselektroden (3) aus mehreren in bestimmungsgemässer Vorbeiführungsrichtung (S) des Materialstücks (1) gesehen hintereinander angeordneten Reihen von Hochspannungselektroden (3) gebildet ist, wobei bei direkt hintereinander liegenden Reihen die Hochspannungselektroden (3) jeweils versetzt angeordnet sind.

30. Verwendung der Vorrichtung nach einem der Ansprüche 17 bis 29 zur Fragmentierung und/oder Schwächung von Faserverbundwerkstoffen, insbesondere von glasfaserverstärktem Kunststoff oder von kohlefaserverstärktem Kunststoff.

## Claims

1. Method for fragmenting and/or weakening a material piece (1) by means of high voltage discharges, comprising the steps of:
a) providing a matrix (2) of multiple high voltage electrodes (3), which are shiftable independently from one another along particularly parallel, particularly vertically oriented shifting axes (X), and each of which is attributed to a common or an own high voltage generator (4), by means of which they are chargeable with high voltage pulses;
b) providing a material piece (1) to be fragmented and/or weakened, immersed in a process liquid (5) ;
c) guiding the material piece (1) past the matrix (2) of high voltage electrodes (3) in a direction running at an angle, particularly substantially perpendicular, to the shifting axes (X) of the high voltage electrodes (3);
and
d) generating high voltage punctures through the material piece (1) during the guiding of the latter past the matrix (2) of high voltage electrodes (3) by charging the high voltage electrodes (3) with high voltage pulses,
wherein during the guiding of the material piece (1) past the matrix (2) of high voltage electrodes (3) and the generation of high voltage punctures through the material piece, the high voltage electrodes (3) are each shifted along their shifting axes (X) in such a way that in each case they follows the contour of the material piece (1) at a certain distance or follows the contour of the material piece (1) in contact with the surface of the latter and during this time are immersed in the process liquid (5).

2. Method according to claim 1, wherein, for guiding the material piece (1) past the matrix (2) of high voltage electrodes (3), it is guided past it substantially horizontally, particularly is shifted horizontally.

3. Method according to claim 2, wherein the material piece (1) is guided past the matrix (2) of high voltage electrodes (3) by means of a transport installation (6), particularly by means of a conveyor belt (6) or a conveyor chain.

4. Method according to claim 3, wherein the transport installation serves as counter electrode to the high voltage electrodes and high voltage punctures between the high voltage electrodes and the conveyor belt are generated through the material piece (1) by charging the high voltage electrodes with the high voltage pulses.

5. Method according to one of the claims 1 to 3, wherein at least one own counter electrode (7) is attributed to each high voltage electrode (3), which is shifted along the shifting axis (X) together with the respective high voltage electrode (3) and is arranged relatively to the respective high voltage electrode (3) in such a way that high voltage punctures between the high voltage electrodes and the counter electrode (7) are generated through the material piece (1) by charging the respective high voltage electrode (3) with the high voltage pulses.

6. Method according to one of the preceding claims, wherein an own high voltage generator (4) is attributed to each high voltage electrode (3), by means of which it is charged with high voltage pulses independently from the other high voltage electrodes (3).

7. Method according to claim 6, wherein the high voltage generator (4) in each case is firmly connected to the respective high voltage electrode (3) and is shifted along the shifting axis (X) together with it.

8. Method according to one of the preceding claims, wherein the distance of each high voltage electrode (3) to the contour of the material piece (1) is continuously measured, particularly in a contactless way, and the high voltage electrode (3) is shifted along the shifting axis (X) in such a way that the measured distance corresponds to a certain target distance.

9. Method according to one of the preceding claims, wherein it is continuously verified for each high voltage electrode (3), particularly in a contactless way, if a material piece (1) is located within a certain distance range to the respective high voltage electrode (3), and wherein the respective high voltage electrode (3) is only charged with high voltage pulses when the verification results in that a material piece (1) is located within this distance range.

10. Method according to one of the preceding claims, wherein a material piece (1) is fragmented and/or weakened, the extension of which is larger in passing direction (S), particularly many times larger, than the extension of the matrix (2) of high voltage electrodes (3) in this direction (S).

11. Method according to one of the preceding claims, wherein the material piece (1) is a component or a piece of a component made of a fiber composite, particularly of glass-fiber-reinforced plastic or of carbon-fiber-reinforced plastic.

12. Method according to claim 10 and to claim 11, wherein the material of the material piece (1) during passage of the material piece (1) past the matrix (2) of high voltage electrodes (3) is weakened by charging with high voltage punctures by means of at least a part of the high voltage electrodes (3) of the matrix (2), wherein the weakened material is deflected under deformation of same, particularly in such a way that it is subsequently guided further substantially in horizontal direction, and wherein the deflected weakened material is fragmented by further charging with high voltage punctures.

13. Method according to claim 12, wherein the further charging of the deflected weakened material with high voltage punctures for fragmenting the material is also done by means of a part of the high voltage electrodes (3) of the matrix (2).

14. Method according to one of the claims 12 to 13, wherein the material piece (1) is supplied with a movement direction (S1) which is inclined downwards to the matrix (2) of high voltage electrodes (3) and, while passing past the matrix (2) of high voltage electrodes (3) after weakening by charging with high voltage punctures by means of at least a part of the high voltage electrodes (3) of the matrix (2), the material of the material piece (1) is deflected under deformation of same, such that after the deflection it is transported further in a movement direction (S2) which is less inclined downwards, particularly in a substantially horizontal movement direction.

15. Method according to claim 3 and according to one of the claims 12 to 14, wherein the deflection is carried out by means of the transport installation (6).

16. Method according to one of the claims 11 to 15, wherein the fiber composite is fragmented in such a way that the plastic content (8) are separated from the fibers (9), and particularly wherein subsequently the fibers (9) are separated entirely or partially by separation from the plastic content (8).

17. Device for carrying out the method according to one of the preceding claims, comprising a matrix (2) of multiple high voltage electrodes (3), which are shiftable independently from one another along particularly parallel, particularly vertically oriented shifting axes (X).

18. Device according to claim 17, wherein an own high voltage generator (4) is attributed to each of the high voltage electrodes (3), by means of which the latter can be charged with high voltage pulses independently from the other high voltage electrodes (3).

19. Device according to claim 18, wherein the high voltage generator (4) in each case is firmly connected to the high voltage electrode (3) and is shifted along the shifting axis (X) together with it.

20. Device according to one of the claims 17 to 19, further comprising a machine controller by means of which, in operation as intended during the passage of the material piece (1) past the matrix (2) of high voltage electrodes (3) and the generation of high voltage punctures through the material piece (1), the high voltage electrodes (3) can be shifted automatically along their shifting axes (X) in such a way that each of them follows the contour of the material piece (1) at a certain distance or each of them follows the contour of the material piece (1) in contact with the surface of the material piece (1).

21. Device according to claim 20, wherein the machine controller is adapted to verify continuously for each high voltage electrode (3), in operation as intended during the passage of the material piece (1) past the matrix (2) of high voltage electrodes (3), if a material piece (1) is located within a certain distance range to the respective high voltage electrode (3), and charges the respective high voltage electrode (3) with high voltage pulses only if the verification results in that a material piece (1) is located within this distance range.

22. Device according to one of the claims 17 to 21, further comprising a transport installation (6), particularly formed as a conveyor belt (6) or conveyor chain, arranged in a basin (10) that can be filled with a process liquid (5), by means of which a material piece (1) to be fragmented and/or weakened, immersed into a process liquid (5), can be guided past the matrix (2) of high voltage electrodes (3), in operation as intended, in a direction (S, S2) substantially perpendicular to the shifting axes (X) of the high voltage electrodes (3).

23. Device according to claim 22, further comprising a supply installation (11), particularly formed as a roller ramp (11), by means of which the material piece (1) to be fragmented and/or weakened is supplied into an area formed between the transport installation (6) and the matrix (2) of high voltage electrodes (3) in a supply direction which is inclined downwards.

24. Device according to claim 23, wherein the supply direction (S1) of the supply installation (11) is in a vertical plane at an angle with respect to the transport direction (S2) of the transport installation (6), particularly at an angle greater than 15°.

25. Device according to one of the claims 23 to 24, further comprising a hold-down device (12), particularly with one or more pressure rollers, by means of which the material piece (1) to be fragmented and/or weakened is secured against takeoff from the supply installation (11) during the supply, in such a way that, in order to entirely pass the area between the transport installation (6) and the matrix (2) of high voltage electrodes (3), it is deformed by the transport installation (6) in this area as a result of a deflection.

26. Device according to one of the claims 22 to 25, wherein the transport device serves as counter electrode to the high voltage electrodes in operation as intended, and high voltage punctures between the high voltage electrodes and the conveyor belt can be generated through the material piece to be fragmented and/or weakened by charging the respective high voltage electrode with the high voltage pulses.

27. Device according to one of the claims 17 to 25, wherein an own counter electrode (7) is attributed to each high voltage electrode (3), which can be shifted along the shifting axis (X) together with the respective high voltage electrode (3) and is arranged relatively to the respective high voltage electrode (3) in such a way that in operation as intended high voltage punctures between the high voltage electrode and its attributed counter electrode (7) can be generated through the material piece (1) to be fragmented and/or weakened by charging the respective high voltage electrode (3) with the high voltage pulses.

28. Device according to one of the claims 17 to 27, further comprising, arranged downstream of the matrix (2) of high voltage electrodes (3), as seen in transport direction (S, S2) of the transport installation (6), a separation installation (13) for separating fiber-type (9) and particle-type (8) fragmentation products.

29. Device according to one of the claims 17 to 28, wherein the matrix (2) of high voltage electrodes (3) is formed by multiple rows of high voltage electrodes (3), which are arranged one after the other as seen in intended direction of passage (S) of the material piece (1), wherein the high voltage electrodes (3) are each shifted in case the rows are arranged directly one after the other.

30. Use of the device according to one of the claims 17 to 29 for fragmenting and/or weakening of fiber composites, particularly of glass-fiber-reinforced plastic or of carbon-fiber-reinforced plastic.

## Revendications

1. Procédé de fragmentation et/ou d'affaiblissement d'une pièce de matériau (1) au moyen de décharges à haute tension, comprenant les étapes suivantes:
a) prévoir une matrice (2) de plusieurs électrodes à haute tension (3) qui peuvent être déplacées indépendamment les unes des autres le long d'axes de déplacement (X) particulièrement parallèles, en particulier orientés verticalement, et qui sont chacune attribuées à un générateur de haute tension (4) commun ou séparé, avec lequel elles peuvent être alimentées en impulsions à haute tension;
b) prévoir une pièce de matériau (1) à fragmenter et/ou à affaiblir immergé dans un liquide de processus (5);
c) faire passer la pièce de matériau (1) à côté de la matrice (2) d'électrodes à haute tension (3) dans une direction à un angle, en particulier essentiellement perpendiculaire, par rapport aux axes de déplacement (X) des électrodes à haute tension (3);
**caractérisé par**
d) générer des décharges à haute tension à travers la pièce de matériau (1) tout en la faisant passer devant la matrice (2) des électrodes à haute tension (3) en appliquant des impulsions à haute tension aux électrodes à haute tension (3),
dans laquelle, pendant le passage de la pièce de matériau (1) à côté de la matrice (2) d'électrodes à haute tension (3) et la génération de perforations à haute tension à travers la pièce de matériau, les électrodes haute à tension (3) sont déplacées chacun le long de leurs axes de déplacement (X), de manière à suivre chacun le contour de la pièce de matériau (1) à une certaine distance ou, en contact avec la surface de la pièce de matériau (1), suivent son contour et pendant cela sont immergés dans le fluide de traitement (5).

2. Procédé selon la revendication 1, selon lequel, pour le passage à côté de la matrice (2) d'électrodes à haute tension (3), la pièce de matériau (1) est guidée essentiellement horizontalement devant, en particulier déplacée horizontalement.

3. Procédé selon la revendication 2, selon lequel la pièce de matériau (1) est guidée à côté de la matrice (2) d'électrodes à haute tension (3) au moyen d'un dispositif de transport (6), en particulier d'une bande transporteuse (6) ou d'une chaîne transporteuse.

4. Procédé selon la revendication 3, selon lequel le dispositif de transport sert de contre-électrode aux électrodes à haute tension et des perforations haute tension sont produites entre les électrodes à haute tension et la bande transporteuse à travers la pièce de matériau en appliquant les impulsions à haute tension aux électrodes à haute tension.

5. Procédé selon l'une des revendications 1 à 3, selon lequel chaque électrode à haute tension (3) est associée à au moins une propre contre-électrode (7) qui, avec l'électrode à haute tension (3) correspondante, est déplacée le long de l'axe de déplacement (X) et est disposée par rapport à l'électrode à haute tension (3) respective, de sorte que des perforations à haute tension sont produites entre l'électrode à haute tension (3) et la contre-électrode (7) à travers la pièce de matériau (1) par l'application d'impulsions à haute tension à l'électrode à haute tension (3) correspondante.

6. Procédé selon l'une des revendications précédentes, selon lequel on attribue à chaque électrode à haute tension (3) son propre générateur de haute tension (4) avec lequel elle est alimentée en impulsions à haute tension indépendamment des autres électrodes à haute tension (3).

7. Procédé selon la revendication 6, selon lequel le générateur de haute tension (4) est relié de manière fixe à l'électrode à haute tension (3) et est déplacé le long de l'axe de déplacement (X) avec celle-ci.

8. Procédé selon l'une des revendications précédentes, selon lequel la distance de chaque électrode à haute tension (3) au contour de la pièce de matériau (1) est mesurée en continu, en particulier sans contact, et l'électrode à haute tension (3) est déplacée le long de l'axe de déplacement (X) de telle sorte que la distance mesurée correspond à une distance prédéterminée souhaitée.

9. Procédé selon l'une des revendications précédentes, selon lequel un contrôle continu est effectué pour chaque électrode à haute tension (3), en particulier sans contact, afin de déterminer si une pièce de matériau (1) se trouve à une certaine distance de l'électrode à haute tension (3) respective, et selon lequel l'électrode à haute tension (3) respective est soumise à des impulsions à haute tension uniquement si le contrôle révèle qu'une pièce de matériau (1) est située à cette distance.

10. Procédé selon l'une des revendications précédentes, selon lequel une pièce de matériau (1) est fragmentée et/ou affaiblie, dont l'étendue est plus grande dans la direction de passage (S), en particulier plusieurs fois plus grande que l'étendue de la matrice (2) des électrodes à haute tension (3) dans cette direction (S).

11. Procédé selon l'une des revendications précédentes, selon lequel la pièce de matériau (1) est un composant ou une pièce d'un composant en un matériau composite fibreux, en particulier en matière plastique renforcée de fibres de verre ou de fibres de carbone.

12. Procédé selon la revendication 10 et la revendication 11, selon lequel le matériau de la pièce de matériau (1) est affaibli en appliquant des décharges haute tension au moyen d'au moins une partie des électrodes à haute tension (3) de la matrice (2) lorsque la pièce de matériau (1) est passée à côté de la matrice (2) des électrodes à haute tension (3), le matériau affaibli étant dévié sous une déformation de celui-ci, en particulier de telle sorte qu'il est ensuite guidé essentiellement dans une direction horizontale, et dans laquelle le matériau affaibli dévié est fragmenté par une exposition supplémentaire à des perforations à haute tension.

13. Procédé selon la revendication 12, selon lequel l'application ultérieure de pérforations à haute tension sur le matériau affaibli dévié pour fragmenter le matériau s'effectue également au moyen d'une partie des électrodes à haute tension (3) de la matrice (2).

14. Procédé selon l'une des revendications 12 à 13, dans laquelle la pièce de matériau (1) est alimentée avec une direction de mouvement (S1) de la matrice d'électrodes à haute tension (3) inclinée vers le bas et le matériau de la pièce de matériau (1) est dévié en déformant le matériau, pendant le passage à côté de la matrice (2) d'électrodes à haute tension (3) après l'affaiblissement en appliquant des perforations à haute tension par au moins une partie des électrodes à haute tension (3) de la matrice (2), de telle sorte qu'après la déviation il est guidé dans une direction de déplacement (S2) moins inclinée vers le bas, en particulier dans une direction de déplacement essentiellement horizontale.

15. Procédé selon la revendication 3 et selon l'une des revendications 12 à 14, la déflexion étant effectuée au moyen du dispositif de transport (6).

16. Procédé selon l'une des revendications 11 à 15, selon lequel le matériau composite fibreux est fragmenté de telle sorte que les composants en matière plastique (8) se séparent des fibres (9), et en particulier selon lequel les fibres (9) sont ensuite séparées totalement ou partiellement des composants en matière plastique (8) par séparation.

17. Dispositif pour effectuer le procédé selon l'une des revendications précédentes, comprenant une matrice (2) d'une pluralité d'électrodes à haute tension (3), **caractérisé en ce qu'**elles sont déplaçables indépendamment les unes des autres le long d'axes de déplacement (X), en particulier parallèles, en particulier orientés verticalement.

18. Dispositif selon la revendication 17, selon lequel un propre générateur de haute tension (4) est attribué à chaque électrode à haute tension (3), avec lequel elle peut être chargée d'impulsions à haute tension indépendamment des autres électrodes à haute tension (3).

19. Dispositif selon la revendication 18, selon lequel le générateur de haute tension (4) est relié de manière fixe à l'électrode à haute tension (3) attribuée et peut être déplacé avec celle-ci le long de l'axe de déplacement (X).

20. Dispositif selon l'une des revendications 17 à 19, comprenant en outre une commande de machine au moyen de laquelle, en fonctionnement prévu, pendant le passage de la pièce de matériau (1) à côté de la matrice (2) des électrodes à haute tension (3) et la génération de perforations à haute tension à travers la pièce de matériau (1), les électrodes à haute tension (3) peuvent être déplacées automatiquement le long de leurs axes de déplacement (X), de telle sorte qu'ils suivent chacun le contour de la pièce de matériau (1) à une distance déterminée ou suivent chacun le contour de la pièce de matériau (1) en contact avec la surface de la pièce de matériau (1).

21. Dispositif selon la revendication 20, selon lequel la commande de machine est conçue pour tester en continu pour chaque électrode à haute tension (3), pendant le fonctionnement prévu, pendant que la pièce de matériau (1) passe à côté de la matrice (2) des électrodes à haute tension (3), si une pièce de matériau (1) se trouve à une certaine distance de l'électrode à haute tension (3) respective, et d'appliquer des impulsions à haute tension à l'électrode à haute tension (3) respective uniquement si le test montre qu'une pièce de matériau (1) se trouve à cette distance.

22. Dispositif selon l'une des revendications 17 à 21, comprenant en outre un dispositif de transport (6), en particulier sous la forme d'une bande transporteuse (6) ou d'une chaîne transporteuse, disposé dans un bassin (10) qui peut être rempli avec un liquide de processus (5) et avec lequel une pièce de matériau (1) à fragmenter et/ou affaiblir peut être guidée, immergée dans un liquide de processus (5), à côté de la matrice (2) d'électrodes à haute tension (3) dans une direction (S, S2) essentiellement perpendiculaire aux axes de déplacement (X) des électrodes à haute tension (3), conformément à son utilisation prévue.

23. Dispositif selon la revendication 22, comprenant un dispositif d'alimentation (11), en particulier sous la forme d'une rampe à rouleaux (11), au moyen duquel la pièce de matériau (1) à fragmenter et/ou à affaiblir peut être alimentée dans une zone formée entre le dispositif de transport (6) et la matrice (2) des électrodes à haute tension (3), avec une direction d'alimentation (S1) inclinée vers le bas.

24. Dispositif selon la revendication 23, selon lequel la direction d'alimentation (S1) du dispositif d'alimentation (11) s'étend dans un plan vertical à un angle par rapport à la direction de transport (S2) du dispositif de transport (6), en particulier à un angle supérieur à 15°.

25. Dispositif selon l'une des revendications 23 à 24, comprenant en outre un dispositif de retenue (12), en particulier avec un ou plusieurs rouleaux presseurs, au moyen duquel la pièce de matériau (1) à fragmenter et/ou à affaiblir est fixée pendant l'alimentation contre un soulèvement du dispositif d'alimentation (11), de telle sorte que, pour passer complètement à travers la zone formée entre le dispositif de transport (6) et la matrice (2) des électrodes à haute tension (3), elle est déformée dans cette zone par suite d'une déformation par le dispositif de transport (6).

26. Dispositif selon l'une des revendications 22 à 25, selon lequel le dispositif de transport sert de contre-électrode aux électrodes à haute tension en fonctionnement prévu et des perforations à haute tension peuvent être produites entre les électrodes à haute tension et la bande transporteuse à travers la pièce de matériau à fragmenter et/ou à affaiblir par application des impulsions à haute tension aux électrodes à haute tension.

27. Dispositif selon l'une des revendications 17 à 25, selon lequel chaque électrode à haute tension (3) est associée à une contre-électrode (7) qui, avec l'électrode à haute tension respective (3), est déplaçable le long de l'axe de déplacement (X) et est disposée par rapport à l'électrode à haute tension respective (3), de telle sorte que, en fonctionnement prévu, des perforations à haute tension peuvent être produites entre l'électrode à haute tension (3) et la contre-électrode (7) correspondante à travers la pièce de matériau (1) à fragmenter et/ou affaiblir en appliquant des impulsions à haute tension à l'électrode à haute tension (3) correspondante.

28. Dispositif selon l'une des revendications 17 à 27, comprenant en outre, disposés dans la direction de transport (S, S2) du dispositif de transport (6) vus en aval de la matrice (2) des électrodes à haute tension (3), un dispositif de séparation (13) pour séparer les produits fibreux (9) et particules (8) de produits de fragmentation.

29. Dispositif selon l'une des revendications 17 à 28, la matrice (2) des électrodes à haute tension (3) étant formée de plusieurs rangées d'électrodes à haute tension (3) disposées les unes derrière les autres dans la direction de passage prévue (S) de la pièce de matériau (1), les électrodes à haute tension (3) étant décalées les unes par rapport aux autres dans le cas de rangées se trouvant directement les unes derrière les autres.

30. Utilisation du dispositif selon l'une des revendications 17 à 29 pour fragmenter et/ou affaiblir des matériaux composites fibreux, en particulier des matières plastiques renforcées de fibres de verre ou de fibres de carbone.
